Europäisches Patentamt

(19) European Patent Office

Office européen des brevets

(11) Publication number: **0 109 741**
**A2**

## (12) EUROPEAN PATENT APPLICATION

(21) Application number: 83305664.1

(22) Date of filing: 23.09.83

(51) Int. Cl.³: **C 04 B 35/60**
**C 01 F 7/46**

(30) Priority: 23.09.82 US 422274

(43) Date of publication of application:
30.05.84 Bulletin 84/22

(84) Designated Contracting States:
AT DE FR GB IT

(71) Applicant: Kennecott Corporation
Midland Building 101 Prospect Avenue
Cleveland Ohio 44115(US)

(72) Inventor: Seider, Robert J.
3435 New Road
Ransomville New York 14131(US)

(74) Representative: Fisher, Bernard et al,
Raworth, Moss & Cook 36 Sydenham Road
Croydon Surrey CR0 2EF(GB)

(54) Process for producing fused alumina products.

㊗ This process produces a high-purity, low-porosity, alpha-alumina product containing no more than 0.05 percent by weight soda, which is useful in the production of abrasives, refractories and electrical insulators by fusing Bayer alumina together with small amounts of carbon and high-purity titanium dioxide, $TiO_2$, or zirconium dioxide, $ZrO_2$.

EP 0 109 741 A2

## PROCESS FOR PRODUCING FUSED ALUMINA PRODUCTS

This invention relates to processes for producing fused alumina products.

Due to special industrial requirements, there is an increased demand for high-purity fused alumina products. Fused products, in general, have low porosity and high density, making them stronger and more resistant to chemical attack than porous or permeable non-fused materials. At present, alumina is the most widely used simple oxide in refractories and abrasives applications because of its desirable chemical and mechanical properties.

For refractory applications, alumina provides moderate thermal-shock resistance, good chemical and mechanical stability in a wide range of atmospheres, and retains fair strength to within about $100^{o}C$ of its melting point. High-alumina refractories which are defined as "neutral"(non-acidic and non-basic) are desirable when in contact with oxidizing and reducing atmospheres, iron oxides or manganese oxides, steam or water vapour, hydrogen, sulphur, fuel ash, carbon monoxide, chlorine and fluorine, and acids except for HF. In recent years, the service conditions for many refractory applications have become more severe, and there has been a steady trend towards the use of high-purity alumina to replace fire clay. For example, high-alumina refractories are more resistant to the effects of high temperature than fire clay refractories. Some of the largest uses for high-alumina refractories are in rotary kilns for cement and lime production, roof brick for electric steel melting furnaces, blast furnace lining and stove brick, ladle brick, and aluminium-contact refractories in aluminium-melting furnaces.

Fused high-purity alumina is desirable in abrasive products because of its high purity and excellent hardness and toughness. Fused alumina is used for loose abrasive grains as well as in bonded and coated abrasive articles. Fused alumina abrasives are used mainly in ferrous metal grinding applications, but are also used widely for non-ferrous and non-metallic grinding.

In the manufacture of electrical insulating elements, such as spark plugs, it is essential to use a material with low porosity, high density, and high purity. High-purity fused alumina is a homogeneous material with low porosity, high density and high purity, and is thus, in its powdered state, an excellent material for making electrical insulator products.

Soda, as an impurity in alumina, has detrimental effects on refractories, abrasives and electrical insulators, even when present in very small amounts. Soda forms a compound with alumina known as beta-alumina, ($Na_2O.11Al_2O_3$); and it can be assumed that all of the soda in high-purity alumina is present in this phase. An alumina product containing only 0.20% to 0.45% $Na_2O$ by weight contains 3.6% to 8.1% beta-alumina by weight, making the actual purity of the alpha-alumina phase less than 91.9% to 96.4% $Al_2O_3$

by weight. This beta-alumina phase is softer, less resistant to chemical attack, and more susceptible to creep (continuous non-reversible deformation with time under load) than the alpha-alumina phase, $Al_2O_3$, and is responsible for pores, cracks and fissures in a fused alumina product. Due to the formation of a beta-alumina phase, soda is an undesirable impurity in alumina for refractory and for certain abrasive applications. Because soda contamination adversely affects the electrical properties of alumina, soda is also an undesirable impurity in alumina for electrical insulating applications.

Bayer alumina refers to the "Bayer" process, which involves the digestion of aluminous material, such as bauxite, in an acqueous caustic solution. Most of the alumina is solubilized by the caustic soda to form sodium aluminate, while insoluble or precipitated impurities are separated out as "red mud". The sodium aluminate solution is then seeded with alumina trihydrate which causes the alumina in solution to form an alumina trihydrate precipitate. This precipitate may then be calcined at about $1200^{\circ}$C to form approximately 99% alumina by weight, with soda as a main impurity.

Regular abrasive grade calcined Bayer alumina generally contains more than 99.0% $Al_2O_3$ by weight, and approximately 0.3 to 0.6% $Na_2O$ by weight as the main impurity. Fusing or melting this calcined Bayer alumina reduces and volatilizes some of the soda, yielding a product containing about 0.20% - 0.45% $Na_2O$ by weight.

Lowering the soda content in alumina tends to be expensive as exemplified in Table 1, which lists

0109741

-4-

varying types of alumina (Alcoa designations), soda contents and prices.

## TABLE 1

### Alumina Prices with Varying Soda Contents

| Type of Alumina | Typical %$Na_2O$ | Cost($/short ton) |
| --- | --- | --- |
| Alcoa A-4 | 0.45 | 256 |
| Alcoa A-10 | 0.10 | 394 |
| Alcoa A-14 | 0.04 | 536 |
| Tabular | 0.10 | 650 |

Alcoa A-4, A-10 and A-14 are Registered Trade Marks in the U.S.A. and relate to calcined Bayer aluminas with varying impurities. Tabular alumina is a high-purity Bayer alumina (greater than 99% $Al_2O_3$), sintered at just below the fusion point of $Al_2O_3$ (around 2035$^{\circ}$C). For the purposes of this invention, Alcoa A-4 is defined as regular abrasive grade calcined Bayer alumina.

The most common prior art method to lower the soda content in calcined alumina uses carbon in the fusion reaction to reduce and volatilize the soda by the following reaction:

$$Na_2O + C = 2Na + CO$$

Using this reaction, one weight unit of soda requires 0.194 weight units of carbon for reduction. In order to lower the soda level of calcined alumina from 0.45 weight percent $Na_2O$ to 0.05 or less weight percent $Na_2O$ by fusion with carbon, 22 times the stoichiometric ratio of 0.194 units carbon to one unit soda is typically required. Thus, 1.7 weight percent carbon relative to alumina is needed in the furnace charge. As a result of adding so much carbon, the low-soda fused alumina product would contain excess carbon, probably present as an aluminium oxycarbide, $4Al_2O_3 \cdot Al_4C_3$. Aluminium oxycarbide is an undesirable product and can be potentially dangerous. Thus, adding excess carbon to the fusion reaction is detrimental to high-purity alumina products. In US-A-4,111,668, the above reaction process is used to reduce and volatilize soda in the process of making a fused aluminium oxide abrasive grain. Also, fairly high amounts of $TiO_2$ are added to the furnace charge in order that the aluminium oxide abrasive grain contain reduced titanium dioxide.

Several alternative methods have been used to lower the soda content in alumina. When calcined alumina is fused in electrolytic-reduction furnaces to make large alumina castings (pigs), some of the beta-alumina phase, $Na_2O \cdot 11Al_2O_3$, segregates during solidication to the centre of the casting. This beta-alumina phase forms well-defined crystal masses which can be separated out by hand after the casting is broken down to lump size, thus lowering the soda level in the fused product.

Another method of lowering the soda level in alumina is the basis for US-A-4,177,235, wherein alumina containing 0.05-0.60% $Na_2O$ by weight is electrically fused with silica and additional alkali to form an alpha-alumina phase in a siliceous matrix. The fused mixture is then crushed, ground, sized, washed with hydrochloric and hyrofluoric acids, and dried. The siliceous phase, which contains most of the soda along with other impurities, is separated from the alumina phase in the sizing and acid washing steps. The resulting alumina product contains at least 99.95% $Al_2O_3$ by weight with less than 0.05% $Na_2O$ by weight as an impurity.

A third alternative for lowering the soda content in 1 to 3 micron particle size range alumina is the basis for US-A-3,262,754, wherein calcined alumina containing 0.65% $Na_2O$ by weight is exposed to minor amounts of chlorine gas at an elevated temperature of around 1200°C, producing alumina particles containing 0.03% $Na_2O$ by weight.

A fourth alternative for lowering the soda content in 2 to 6 micron particle size range sintered (tabular) alumina is disclosed in US-A-4,045,234, wherein the calcined alumina is treated with a "synergistically acting" combination of a magnesium salt and a boron compound. In which invention, the soda content is lowered to less than 0.03% Na by weight.

Prior art methods, in general, use complicated methods for reducing the soda in alumina, incur increased production costs because of additional required processing steps, and may produce undesirable byproducts.

Accordingly, it is an object of this invention to provide a method for lowering the soda content in fused alumina, to 0.05% or less by weight $Na_2O$.

It is another object of this invention to provide an easy, efficient and inexpensive method for lowering the soda content in high-purity fused alumina.

According to the present invention there is provided a process for producing a high-purity, fused alumina product, containing no more than 0.05 percent by weight soda, comprising the steps of:

a) charging to a furnace a mixture of:

(i) alumina containing from about 0.1 to 0.6% by weight $Na_2O$ as an impurity;

(ii) from about 0.05 to 0.65% by weight $TiO_2$ or $ZrO_2$; and

(iii) less than 1.0 percent by weight carbon;

b) fusing the mixture of step a) under reducing conditions in order to melt the mixture and cause reduction of the $Na_2O$ in the alumina; and

c) processing the fused alumina material to produce the desired product.

Minor amounts of titanium carbide, TiC, or zirconium carbide, ZrC, are produced in the alumina product as a byproduct of the combined fusion reaction.

To produce the fused, low-soda alumina of this invention, the alumina mixture is with advantage fused at above about $2040^{\circ}C$, preferably in an electric-arc furnace. The electric arc of the furnace is a reducing arc passed from carbon electrodes to the mixture of alumina, carbon and $TiO_2$ or $ZrO_2$ for a sufficient length of time to fuse the mixture.

Preferred products are abrasive refractory and electrical insulating.

Regular abrasive grade calcined Bayer alumina (e.g. Alcoa A-4), containing approximately 0.3 to 0.6 by weight percent $Na_2O$ as the main impurity, is the preferred alumina used in the process of this invention, but Bayer aluminas with lesser amounts of $Na_2O$ as the main impurity, such as Alcoa A-10, Alcoa A-14, or tabular alumina can also be used. The carbon added to the fusion mixture of this invention is preferably graphite or calcined petroleum coke. The titanium dioxide or zirconium dioxide added to the fusion mixture of this invention is preferably of high-purity such as ceramic grade, pigment grade or electronic grade, so as not to introduce any extraneous impurities into the product. -

In the process of this invention, the alumina mixture is fused at above about $2040^{\circ}C$ in an electric-arc furnace. The electric arc of the furnace is a reducing arc passed from carbon electrodes to the fusion mixture of alumina, carbon and $TiO_2$ or $ZrO_2$ for a sufficient length of time to fuse or melt the mixture. A relatively "short arc" is required for the reducing conditions, which "short arc" is obtained by controlling the power input and phase voltage.

The thermochemical relationships which govern the reduction of soda content simultaneously with the formation of titanium or zirconium carbides are not precisely known. The reactants, carbon, soda, and titania or zirconia must initially be in solution in molten alumina and the atmosphere above the molten alumina must be of a reducing nature. Soda may leave the solution as the gaseous oxide or as elemental sodium vapour, formed by the reducing reactions.

It is not essential that titanium or zirconium carbide crystals be present in the final fused alumina. They are formed only if an excess of the reactants, titania and carbon are present in the molten alumina, and if formed, they may sink to the bottom of the furnace due to their higher density. Nevertheless, the presence of titanium or zirconium carbides in the alumina fusion is particularly beneficial if the alpha-alumina product is to be used for abrasive purposes.

The high-purity, low-soda, low-porosity, alpha-alumina product, formed by the process of this invention, may be used to produce abrasives, refractories, and electrical insulators by any suitable means known in the art.

The invention is further illustrated by the following non-limiting examples:

## EXAMPLE I

A tilting electric-arc furnace equipped with two, 101.6mm (4") diameter graphite electrodes, was used for the fusion of alumina, carbon, and titanium dioxide. The electric reducing arc, passed from the electrodes to the furnace mixture, was supplied by a single-phased power supply, a voltage of 72 volts, and a power supply of 134 kilowatts. The furnace charge of 113.4kg (250 total pounds) contained 0.47% carbon by weight in the form of calcined petroleum coke and 0.10% high-purity $TiO_2$ by weight, with the balance consisting of regular abrasive grade calcined Bayer alumina, Alcoa A-4, containing 0.36% $Na_2O$ by weight as the main impurity. The mixture was furnaced for two hours at a temperature of 2100°C to reduce the soda in the alumina. The resulting fused alumina product contained 0.05% $Na_2O$ by weight.

## EXAMPLE 2

Example 1 was repeated except that the power supply was 135 kilowatts, and the furnace charge contained 0.59% carbon by weight and 0.25% $TiO_2$ by weight, with the balance consisting of alumina containing 0.40% $Na_2O$ by weight. The resulting fused alumina product contained 0.02% $Na_2O$ by weight.

## EXAMPLE 3

Example 1 was repeated except that the power supply was 135 kilowatts, and the furnace charge contained 0.66% carbon by weight and 0.40% $TiO_2$ by weight, with the balance consisting of alumina containing 0.40% $Na_2O$ by weight. The resulting fused alumina product contained 0.02% $Na_2O$ by weight.

## EXAMPLE 4

Example 1 was repeated except that the power supply was 128 kilowatts, and the balance of the furnace charge consisted of alumina containing 0.40% $Na_2O$ by weight. No $TiO_2$ was added to the furnace charge. The resulting fused alumina product contained 0.16% $Na_2O$ by weight. Thus, when no $TiO_2$ was added to the furnace charge, the reduction of the soda in the alumina was not nearly as substantial as when both carbon and $TiO_2$ were added to the furnace charge.

EXAMPLE 5

Example 2 was repeated except that the power supply was 120 kilowatts, the voltage was 127 volts, and the electrodes were placed above the furnace mixture to produce oxidizing conditions. The furnace charge was identical to Example 2. The resulting fused alumina product contained 0.30% $Na_2O$ by weight. Thus, an oxidizing environment was not nearly as successful in lowering the soda content in alumina as a reducing environment.

These examples are summarised in Table 2, which lists furnace conditions, furnace charge constituents and the percentage of soda in the product.

TABLE 2

Test Conditions and Results - Reduction of Soda in Alumina

| Example | Furnace Conditions Power (kw) | Volts | Furnace Charge Contained %$Na_2O$ | %C Added | %$TiO_2$ Added | Product % $Na_2O$ |
|---|---|---|---|---|---|---|
| 1 | 134 | 72 | 0.36 | 0.47 | 0.10 | 0.05 |
| 2 | 135 | 72 | 0.40 | 0.59 | 0.25 | 0.02 |
| 3 | 135 | 72 | 0.40 | 0.66 | 0.40 | 0.02 |
| 4 | 128 | 72 | 0.40 | 0.47 | --- | 0.16 |
| 5 | 120 | 127 | 0.40 | 0.59 | 0.25 | 0.30 |

-12-

Variations and modifications of the described examples to achieve similar results, will be obvious to those skilled in the art within the scope of the invention as defined by the appended claims.

0109741

-13-

CLAIMS:

1.   A process for producing a high-purity, fused alumina product, containing no more than 0.05 percent by weight soda, comprising the steps of:

a) charging to a furnace a mixture of:

(i) alumina containing from about 0.1 to 0.6% by weight $Na_2O$ as an impurity;;

(ii) from about 0.05 to 0.65% by weight $TiO_2$ or $ZrO_2$; and

(iii) less than 1.0 percent by weight carbon;

b) fusing the mixture of step a) under reducing conditions in order to melt the mixture and cause reduction of the $Na_2O$ in the alumina; and

c) processing the fused alumina material to produce the desired product.

2.   A process according to Claim 1, wherein the $TiO_2$ in the furnace charge is high-purity titanium dioxide.

3.   A process according to Claim 1, wherein the $ZrO_2$ in the furnace charge is high-purity zirconium dioxide.

4.   A process according to Claim 1, 2 or 3, wherein the alumina in the furnace charge is calcined Bayer alumina.

5.   A process according to Claim 4, wherein the alumina in the furnace charge is regular abrasive grade calcined Bayer alumina.

6. A process according to Claim 1, 2 or 3, wherein the alumina in the furnace charge is tabular alumina.

7. A process according to any one of the preceding claims, wherein the carbon in the furnace charge is graphite.

8. A process according to any one of Claims 1 to 6, wherein the carbon in the furnace charge is calcined petroleum coke.

9. A process according to any one of the preceding claims, wherein the furnace is an electric-arc furnace.

10. A process according to Claim 9, wherein the electric arc is a short reducing arc passed from carbon electrodes to the melt mixture.

11. A process according to Claim 10, wherein the electric arc is supplied by a single-phase power supply having a voltage of about 72 volts and a power input of about 125 to 140 kilowatts.

12. A process according to any one of the preceding claims, wherein the furnace temperature is above about 2040°C.